# EUROPEAN PATENT SPECIFICATION

(11) **EP 3 513 851 B1**
(45) Date of publication and mention of the grant of the patent: **10.06.2020**
(21) Application number: 18152423.2
(22) Date of filing: 18.01.2018
(51) Int. Cl.: A63F 13/98, A63F 13/26

(54) **APPARATUS FOR PORTABLE VIDEO GAMING**
VORRICHTUNG FÜR PORTABLE VIDEOSPIELE
APPAREIL POUR JEU VIDÉO PORTABLE

(43) Date of publication of application: 24.07.2019
(73) Proprietor: Berthold, Maik, 73630 Remshalden (DE)
(72) Inventor: Berthold, Maik, 73630 Remshalden (DE)
(74) Representative: Meyer zu Bexten, Elmar

(56) References cited:
- DE-U1- 20 217 001
- US-A1- 2005 250 583
- US-A1- 2011 092 294
- US-A1- 2013 267 314
- US-A1- 2017 035 167
- Gaems ET AL: "PGE User Guide For Vanguard and Sentry Models", , 1 January 2016 (2016-01-01), XP055466262, Retrieved from the Internet: URL:https://gaemspge.com/media/wysiwyg/PGE _User_Guide_v10_102116_v4 2!.pdf [retrieved on 2018-04-11]
- Hyperkin: "Xbox One "The Rook" Travel Bag - Polygon - Xbox One - MICROSOFT", archive.org, 12 July 2016 (2016-07-12), XP055466299, Retrieved from the Internet: URL:https://web.archive.org/web/2016071216 4501/http://www.hyperkin.com:80/microsoft/ xbox-one/xbox-one-the-rook-travel-bag-poly gon.html [retrieved on 2018-04-11]

## Description

### Technical Field

The invention relates to an apparatus comprising a carrying case for a video game console as defined in appended Claim 1.

### Background Art

A video game is any electronic game that involves interaction with a user interface to generate visual feedback on a video device such as a television screen or computer monitor. Electronic systems used to play video games are known in the art as "platforms", examples of which include personal computers and video game consoles. State-of-the-art platforms range from arcade games in large, typically coin-operated chassis to small handheld computing devices.

US 9333423 B (G A E M S INC [US]) 10.10.2013 discloses a portable gaming and entertainment system for use with a game console and related components that allows the user thereof to transport the system. The system comprises a case having a lid pivotally attached to a base. One or more custom inserts are provided to receive the game console therein. The custom inserts permit the system to be usable with a variety of supported game consoles. The lid includes a monitor and speakers, and is operative to be opened and maintained at a position to provide a desirable viewing angle for a user. The lid closes against the base to enclose the game console and other related components so that the user may transport or store the system.

Key market segments of consoles, handheld, and PC-based games are outlined in WILLIAMS, Dmitri. Structure and competition in the US home video game industry. International Journal on Media Management. 2002, vol.4, no.1, p.41-54.

### Summary of invention

The invention as claimed is hereinafter disclosed in such a way that the technical problem with which it deals can be appreciated and the solution can be understood.

### Technical Problem

Known apparatus are essentially limited to assembling a monitor and console in a joint carrying case with no or little customizable decor.

As per the state of the art, monitor and console require independent power connections, aggravating the risk of "cable tangle".

Conventional portable gaming systems are restricted to very few screen sizes.

Prior-art entertainment environments, while catering for highly mobile players, are less than ideally suited for stationary gaming.

### Solution to Problem

The problem is solved by the apparatus as defined in appended Claim 1.

### Advantageous effect of invention

An embodiment of the invention offers various means of case modification ("modding") such as through light-emitting diodes (LEDs), customizable themes, and imagery, all combined in a modular and highly extensible carrying case.

The invention is based on what may be called a "plug-and-play" concept: Upon connecting a single power cord, all components contained in the case are instantly operational.

Variants of the invention allow for screen sizes between and 47 and 61 cm, which in the industry is generally considered sufficient for competitive gaming.

An apparatus as per the invention may be perfectly tailored to the gamer. While also designed for portable use, a stationary version is well within the scope of the present invention.

### Brief description of drawings

The sole figure shows a perspective view of an apparatus as per the invention.

### Description of embodiments

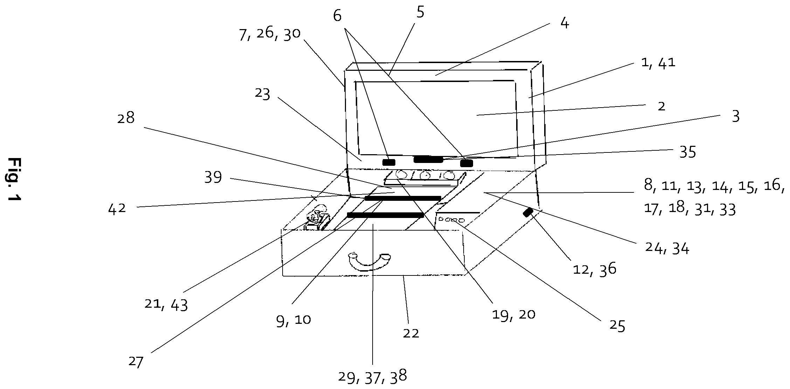

Figure 1 illustrates an apparatus for portable video gaming, most prominently featuring a flat liquid-crystal display (LCD) screen (2) in an aluminum carrying case (22) and attached by four monitor mounts (1), each cushioned by a felt pad (41), inside the case's lid. A lowered tray (27) inside the case (22) retains a video game console (42), the tray (27) itself being supported by two pedestals (37) at the front connected to it by means of four neodymium magnets (38). Two hinges (28) installed on the back side of the tray (27) may be employed to detach the latter from its pedestals (37) and tilt it up against the force of the magnets (38) into a raised position (not depicted), wherein the tray (27) is conveniently locked by an additional tilt foot (29) connected to a further hinge affixed to its front side. Throughout this transformation, two hook-and-loop fasteners (39) attached transversally to the tray (27) prevent any shift of the console (42) supported thereon.

Affixed outwardly to the lid, a film serves as an electroluminescent source (7), illuminating a semi-transparent, custom-printed backlight foil (26) bonded to the electroluminescent source (7) and being selectively masked by an opaque sheet (30) inserted between the two layers (7, 26).

Now directing attention to the electrical aspects of the invention, a distributor housing (24) arranged laterally alongside the tray (27) on its right comprises a mains adapter (11) supplied externally through a power cord (36) attached to a socket (12) which is also disposed in the housing (24). Internally, the mains adapter (11) connects to two screw terminals (16) via an IEC/CEE cable (33) and to the console (42) via an angled cord (31). In addition to a boost converter (14) supplying the electroluminescent source (7), a dedicated buck or step-down converter (13) is wired to the terminals (16) and serves as a 5 V universal serial bus (USB) power source. Further, an LED controller (8) is wired to the terminals (16) via a lead cable (17) and connected to a self-adhesive LED strip (9), which in turn is guided rectangularly underneath the tray (27) by four corner connections (10).

Three silent chassis fans (19), arranged behind the tray (27) and wired to the terminals (16), vent the console (42) and are joined to the case (22) by two hinge-joints (20), allowing the fans (19) to be hinged or swung upward as needed whenever the console (42) is being mounted or dismounted. Four illuminated switches (25) disposed on the distributor housing (24) serve to operate the LED strip (9), electroluminescent source (7), fans (19), and entire mains adapter (11). A charging station (21) is integrated with the case (22) and may be used to store and recharge a gamepad (43) or similar controller compatible with the console (42).

Turning again to the lid and its components, an additional controller board (3) is wired to the terminals (16) via a further lead cable (17) and serve to control the screen (2), also connecting to the console (42) via a high-definition multimedia interface (HDMI) cable (15). A plastic bezel (4) is screwed to the mounts (1) by means of four self-tapping chipboard screws (23) and frames the screen (2) while blocking the board (3) from view. A pair of speakers (6) for playback of sound and an operator control panel (35) for operating the screen (2) are further embedded in the bezel (4). Optionally, the bezel (4) and distributor housing (24) may be decorated by carbon foil (5, 34) for improved appearance.

### Industrial applicability

The invention is applicable, among others, throughout the entertainment industry.

### Reference signs list

- 1: Monitor mounts
- 2: Flat screen
- 3: Controller board
- 4: Plastic bezel
- 5: Carbon foil
- 6: Pair of speakers
- 7: Electroluminescent film
- 8: LED controller
- 9: LED strip
- 10: Corner connections
- 11: Mains adapter
- 12: Socket
- 13: Step-down converter
- 14: Boost converter
- 15: HDMI cable
- 16: Screw terminals
- 17: Lead cable
- 18: (Further) lead cable
- 19: Chassis fans
- 20: Hinge-joints
- 21: Charging and storing station for gamepad
- 22: Carrying case
- 23: Self-tapping chipboard screws
- 24: Distributor housing
- 25: Illuminated switches
- 26: Backlight foil
- 27: Tray
- 28: Hinges
- 29: Tilt foot
- 30: Opaque sheet
- 31: Angled cord
- 33: lEC cable
- 34: (Further) carbon foil
- 35: Operator control panel
- 36: Power cord
- 37: Pedestals
- 38: Neodymium magnets
- 39: Hook-and-loop fasteners
- 41: Felt pads
- 42: Video game console
- 43: Gamepad

### Citation list

The following documents are cited hereinbefore.

### Patent literature

US 9333423 B (G A E M S INC [US]) 10.10.2013

### Non-patent literature

WILLIAMS, Dmitri. Structure and competition in the US home video game industry. International Journal on Media Management. 2002, vol.4, no.1, p.41-54.

## Claims

1. Apparatus for portable video gaming comprising
a carrying case (22), preferably of aluminum or plastic, having a lid, monitor mounts (1), preferably of plastic, arranged inside the lid for mounting a screen (2), preferably being a flat screen, such as a liquid-crystal display, and a tray (27) arranged inside the case (22) for supporting a video game console (42), the tray (27) having a back side and a front side, **characterized in** the carrying case further having:
pedestals (37) for supporting the tray (27) in a lowered position, hinges (28) installed on the back side for tilting the tray (27) up into a raised position, and
a tilt foot (29) affixed to the front side for locking the tray (27) in the raised position.

2. Apparatus as per Claim 1
**characterized in**
magnets (38), preferably of neodymium, affixed between the pedestals (37) and tray (27) for detachably connecting the pedestals (37) and tray (27) in the lowered position, the magnets (38) being dimensioned such that the tray (27) disconnects from the pedestals (37) when tilted by means of the hinges (28).

3. Apparatus as per Claim 1 or Claim 2
**characterized in**
hook-and-loop fasteners (39) attached to the tray (27) for preventing a shift of the console (42) supported thereon.

4. Apparatus as per any of the preceding claims
**characterized in**
an electroluminescent source (7), preferably a film, affixed outwardly to the lid, a semi-transparent, preferably custom-printed backlight foil (26) bonded to the electroluminescent source (7), and an opaque sheet (30) placed between the electroluminescent source (7) and backlight foil (26) for selectively masking the electroluminescent source (7).

5. Apparatus as per Claim 4
**characterized in**
a distributor housing (24), preferably arranged laterally alongside the tray (27), comprising
a mains adapter (11) for supplying a direct current,
terminals (16), preferably screw terminals, connected to the mains adapter (11) via an IEC cable (33) and connectable to the console (42) via a preferably angled cord (31),
a step-down converter (13), preferably a USB power source, wired to the terminals (16) for stepping the current down to a voltage such as 5 V, and a boost converter (14) wired to the terminals (16) for supplying the electroluminescent source (7).

6. Apparatus as per Claim 5
**characterized in**
an LED controller (8), wired to the terminals (16) via a lead cable (17) and preferably contained in the distributor housing (24),
a preferably self-adhesive LED strip (9) connected to the LED controller (8), and
corner connections (10), preferably affixed beneath the tray (27), for guiding the LED strip (9) rectangularly underneath the tray (27).

7. Apparatus as per Claim 6
**characterized in**
preferably silent chassis fans (19), wired to the terminals (16) and arranged behind the tray (27), for venting the console (42) and
hinge-joints (20) joining the fans (19) to the case (22) for swinging out the fans (19) when the console (42) is mounted or dismounted.

8. Apparatus as per Claim 7
**characterized in**
preferably illuminated switches (25) disposed on the distributor housing (24) for operating the LED strip (9), electroluminescent source (7), fans (19), and entire mains adapter (11).

9. Apparatus as per any of Claim 5 to Claim 8
**characterized in**
a socket (12), connected to the mains adapter (11) and preferably contained in the distributor housing (24), for attaching a power cord (36) externally to the case (22).

10. Apparatus as per any of Claim 5 to Claim 9
**characterized in**
a controller board (3), wired to the terminals (16) via a further lead cable (18) and preferably arranged inside the lid, for controlling the screen (2),
an HDMI cable (15) for connecting the board (3) to the console (42),
a plastic bezel (4), preferably screwed to the mounts (1) by means of self-tapping chipboard screws (23), framing the screen (2) to block the board (3) from view,
a carbon foil (5) adhering to the bezel (4) for decorating the screen (2),
a pair of speakers (6) embedded in the bezel (4) for playback of sound, and
an operator control panel (35) connected to the board (3) and inserted in the bezel (4) for operating the screen (2).

11. Apparatus as per any of Claim 5 to Claim 10
**characterized in**
a charging and storing station (21), wired to the terminals (16) and preferably integral with the case (22), for charging a gamepad (43) while the current is supplied.

12. Apparatus as per any of Claim 5 to Claim 11
**characterized in**
further carbon foil (34) adhering to the distributor housing (24).

13. Apparatus as per any of the preceding claims
**characterized in**
felt pads (41) arranged between the mounts (1) and the screen (2).

14. Apparatus as per any of the preceding claims
**characterized in**
arbitrary modules such as a storage rack or cupholder.

15. Apparatus as per any of the preceding claims
comprising
the console (42).

## Patentansprüche

1. Vorrichtung zum mobilen Videospielen, umfassend
einen Transportkoffer (22), vorzugsweise aus Aluminium oder Kunststoff, mit einem Deckel, vorzugsweise aus Kunststoff bestehende Monitorhalterungen (1), die innerhalb des Deckels angeordnet sind, um einen vorzugsweise flachen Bildschirm (2) wie beispielsweise eine Flüssigkristallanzeige zu montieren, und
eine innerhalb des Koffers (22) angeordnete Ablage (27) zum Lagern einer Videospielkonsole (42), wobei die Ablage (27) eine Rückseite und eine Vorderseite aufweist,
**gekennzeichnet durch**
Sockel (37) zum Abstützen der Ablage (27) in einer abgesenkten Position,
Scharniere (28), die auf der Rückseite angebracht sind, um die Ablage (27) in eine erhöhte Position zu kippen, und
einen Kippfuß (29), der an der Vorderseite befestigt ist, um die Ablage (27) in der angehobenen Position zu arretieren.

2. Vorrichtung nach Anspruch 1,
**gekennzeichnet durch**
Magnete (38), vorzugsweise aus Neodym, die zwischen den Sockeln (37) und der Ablage (27) zum lösbaren Verbinden der Sockel (37) und der Ablage (27) in der abgesenkten Position befestigt sind,
wobei die Magnete (38) so bemessen sind, dass die Ablage (27) sich beim Kippen über die Scharniere (28) von den Sockeln (37) löst.

3. Vorrichtung nach Anspruch 1 oder Anspruch 2,
**gekennzeichnet durch**
Klettverschlüsse (39), die an der Ablage (27) befestigt sind, um ein Verschieben der darauf gelagerten Konsole (42) zu verhindern.

4. Vorrichtung gemäß einem der vorstehenden Ansprüche,
**gekennzeichnet durch**
eine elektrolumineszierende Quelle (7), vorzugsweise eine Folie, die außen am Deckel befestigt ist,
eine halbtransparente, vorzugsweise individuell bedruckte Hintergrundbeleuchtungsfolie (26), die mit der elektrolumineszierenden Quelle (7) verbunden ist, und
eine opake Folie (30), die zwischen der elektrolumineszierenden Quelle (7) und der Hintergrundbeleuchtungsfolie (26) angeordnet ist, um die elektrolumineszierende Quelle (7) selektiv zu maskieren.

5. Vorrichtung nach Anspruch 4,
**gekennzeichnet durch**
ein Verteilergehäuse (24), vorzugsweise seitlich an der Ablage (27) angeordnet, umfassend
ein Netzteil (11) zum Zuführen eines Gleichstroms,
Klemmen (16), vorzugsweise Schraubklemmen, die über ein lEC-Kabel (33) mit dem Netzteil (11) verbunden und über ein vorzugsweise abgewinkeltes Kabel (31) mit der Konsole (42) verbindbar sind, einen Abwärtswandler (13), vorzugsweise eine USB-Stromquelle, der mit den Klemmen (16) verdrahtet ist, um den Strom auf eine Spannung von beispielsweise 5 V herunterzutransformieren, und
einen Aufwärtswandler (14), der mit den Klemmen (16) verbunden ist, um die elektrolumineszierende Quelle (7) zu versorgen.

6. Vorrichtung nach Anspruch 5,
**gekennzeichnet durch**
eine LED-Steuerung (8), die über ein Zuleitungskabel (17) mit den Klemmen (16) verdrahtet und
vorzugsweise im Verteilergehäuse (24) enthalten ist,
einen vorzugsweise selbstklebenden LED-Streifen (9), der mit der LED-Steuerung (8) verbunden ist, und
Eckverbindungen (10), vorzugsweise unter der Ablage (27) befestigt, zum rechtwinkligen Führen des LED-Streifens (9) unter der Ablage (27).

7. Vorrichtung nach Anspruch 6,
**gekennzeichnet durch**
vorzugsweise geräuscharme Gehäuselüfter (19), die mit den Klemmen (16) verdrahtet und hinter der Ablage (27) angeordnet sind, um die Konsole (42) zu entlüften und
Scharniergelenke (20), die die Lüfter (19) mit dem Gehäuse (22) verbinden, um die Lüfter (19) auszuschwenken, wenn die Konsole (42) auf- oder abgebaut wird.

8. Vorrichtung nach Anspruch 7,
**gekennzeichnet durch**
vorzugsweise beleuchtete Schalter (25) am Verteilergehäuse (24) zum Betreiben des LED-Streifens (9), der elektrolumineszierenden Quelle (7), der Lüfter (19) und des gesamten Netzteils (11).

9. Gerät nach einem der Ansprüche 5 bis 8,
**gekennzeichnet durch**
eine Steckdose (12), die mit dem Netzteil (11) verbunden und vorzugsweise im Verteilergehäuse (24) enthalten ist, zum Befestigen eines Netzkabels (36) von außen am Gehäuse (22).

10. Vorrichtung nach einem der Ansprüche 5 bis 9,
**gekennzeichnet durch**
eine Steuerplatine (3), die über ein weiteres Zuleitungskabel (18) mit den Klemmen (16) verdrahtet und vorzugsweise im Deckel angeordnet ist, zum Steuern des Bildschirms (2),
ein HDMI-Kabel (15) zum Verbinden der Platine (3) mit der Konsole (42),
eine Kunststoffblende (4), die vorzugsweise mittels selbstschneidender Spanplattenschrauben (23) mit den Halterungen (1) verschraubt ist und den Bildschirm (2) umrahmt, um den Blick auf die Platte (3) zu versperren,
eine Carbonfolie (5), die an der Blende (4) haftet, zum Dekorieren des Bildschirms (2),
ein Paar Lautsprecher (6), die in die Blende (4) eingebettet sind, zur Wiedergabe von Ton, und
ein Bedienfeld (35), das mit der Platine (3) verbunden und in die Blende (4) eingesetzt ist, um den Bildschirm (2) zu bedienen.

11. Vorrichtung nach einem der Ansprüche 5 bis 10,
**gekennzeichnet durch**
eine Lade- und Aufbewahrungsstation (21), die mit den Klemmen (16) verdrahtet und vorzugsweise in das Gehäuse (22) integriert ist, zum Laden eines Gamepads (43), während der Strom zugeführt wird.

12. Vorrichtung nach einem der Ansprüche 5 bis 11,
**gekennzeichnet durch**
eine weitere Carbonfolie (34), die am Verteilergehäuse (24) haftet.

13. Vorrichtung gemäß einem der vorstehenden Ansprüche,
**gekennzeichnet durch**
Filzpolster (41), die zwischen den Halterungen (1) und dem Bildschirm (2) angeordnet sind.

14. Vorrichtung gemäß einem der vorstehenden Ansprüche,
**gekennzeichnet durch**
beliebige Module wie ein Ablagefach oder Getränkehalter.

15. Vorrichtung gemäß einem der vorstehenden Ansprüche,
umfassend
die Konsole (42).

## Revendications

1. Appareil de jeu vidéo portable comprenant
une mallette de transport (22), de préférence en aluminium ou en plastique, comportant un couvercle,
des supports de moniteur (1), de préférence en plastique, disposés dans le couvercle pour monter un écran (2), de préférence un écran plat tel qu'un écran à cristaux liquides, et
un plateau (27) disposé dans la mallette (22) pour supporter une console de jeu vidéo (42), le plateau (27) ayant un côté arrière et un côté avant,
caractérisé en
des socles (37) pour supporter le plateau (27) dans une position abaissée,
des charnières (28) installées sur le côté arrière pour basculer le plateau (27) vers le haut dans une position relevée, et
un pied inclinable (29) fixé sur le côté avant pour verrouiller le plateau (27) en position relevée.

2. Appareil selon la revendication 1
caractérisé en
aimants (38), de préférence en néodyme, fixés entre les socles (37) et le plateau (27) pour relier de manière amovible les socles (37) et le plateau (27) en position abaissée, les aimants (38) étant dimensionnés de telle sorte que le plateau (27) se détache des socles (37) quand il est incliné au moyen des charnières (28).

3. Appareil selon la revendication 1 ou la revendication 2
caractérisé en
des attaches auto-agrippantes (39) fixées au plateau (27) pour empêcher un déplacement de la console (42) supportée sur celui-ci.

4. Appareil selon l'une ou l'autre des affirmations précédentes
caractérisé en
une source électroluminescente (7), de préférence un film, fixée extérieurement sur le couvercle, une feuille de rétroéclairage semi-transparente (26), de préférence imprimée sur mesure, liée à la source électroluminescente (7), et
une plaque opaque (30) placée entre la source électroluminescente (7) et la feuille de rétroéclairage (26) pour masquer de manière sélective la source électroluminescente (7).

5. Appareil selon la revendication 4
caractérisé en
un boîtier de distribution (24), de préférence disposé latéralement le long du plateau (27), comprenant
un adaptateur secteur (11) pour l'alimentation d'un courant continu,
des bornes (16), de préférence des bornes à vis, reliées à l'adaptateur secteur (11) par un câble IEC (33) et pouvant être reliées à la console (42) par un câble (31) de préférence coudé,
un convertisseur abaisseur (13), de préférence une source d'alimentation USB, câblé aux bornes (16) pour abaisser le courant à une tension telle que 5 V, et
un convertisseur élévateur (14) câblé aux bornes (16) pour alimenter la source électroluminescente (7).

6. Appareil selon la revendication 5
caractérisé en
un contrôleur de LED (8), câblé aux bornes (16) par un câble conducteur (17) et de préférence contenu dans le boîtier de distribution (24),
une bande LED de préférence auto-adhésive (9) reliée au contrôleur de LED (8), et
des raccords d'angle (10), de préférence fixés sous le plateau (27), pour guider la bande LED (9) de manière rectangulaire sous le plateau (27).

7. Appareil selon la revendication 6
caractérisé en
des ventilateurs de châssis (19), de préférence silencieux, câblés aux bornes (16) et disposés derrière le plateau (27), pour purger la console (42) et
des articulations (20) reliant les ventilateurs (19) au mallette (22) pour faire pivoter les ventilateurs (19) lorsque la console (42) est montée ou démontée.

8. Appareil selon la revendication 7
caractérisé en
des interrupteurs (25) de préférence éclairés, disposés sur le boîtier de distribution (24) pour commander la bande LED (9), la source électroluminescente (7), les ventilateurs (19) et l'adaptateur secteur complet (11).

9. Appareil selon l'une quelconque des revendications 5 à 8
caractérisé en
une prise femelle (12), reliée à l'adaptateur secteur (11) et contenue de préférence dans le boîtier de distribution (24), pour fixer un cordon d'alimentation (36) à l'extérieur du mallette (22).

10. Appareil selon l'une quelconque des revendications 5 à 9
caractérisé en
une carte de commande (3), câblée aux bornes (16) par un autre câble conducteur (18) et disposée de préférence à l'intérieur du couvercle, pour commander l'écran (2),
un câble HDMI (15) pour connecter la carte (3) à la console (42),
un masque en matière plastique (4), de préférence vissé sur les supports (1) au moyen de vis autotaraudeuses (23) pour panneaux d'aggloméré, encadrant l'écran (2) pour bloquer la carte (3) du regard,
une feuille de carbone (5) adhérante à la lunette (4) pour décorer l'écran (2),
une paire de haut-parleurs (6) intégrés dans le masque (4) pour la reproduction du son, et
un panneau de commande d'opérateur (35) connecté à la carte (3) et inséré dans le cadre (4) pour commander l'écran (2).

11. Appareil selon l'une quelconque des revendications 5 à 10
caractérisé en
une station de chargement et de rangement (21), câblée aux bornes (16) et de préférence intégrée à la mallette (22), pour charger une manette de jeu (43) lorsque le courant est fourni.

12. Appareil selon l'une quelconque des revendications 5 à 11
caractérisé en
une autre feuille de carbone (34) adhérente au boîtier de distribution (24).

13. Appareils selon l'une ou l'autre des affirmations précédentes
caractérisé en
des patins en feutre (41) disposés entre les supports (1) et l'écran (2).

14. Appareil selon l'une ou l'autre des revendications précédentes
caractérisé en
des modules quelconques tels qu'un rack de stockage ou un porte-gobelet.

15. Appareil selon l'une ou l'autre des revendications précédentes comprenant
la console (42).
